# EUROPEAN PATENT APPLICATION

(11) **EP 3 812 238 A1**
(43) Date of publication of application: **28.04.2021**
(21) Application number: 19819573.7
(22) Date of filing: 06.06.2019
(51) Int. Cl.: B61L 25/02, B60L 3/00

(54) **TRAIN CONTROL DEVICE**

(30) Priority: 13.06.2018 JP 2018113194
(71) Applicant: Hitachi, Ltd., Tokyo 100-8280 (JP)
(72) Inventor: FUCHIGAMI, Koki, Tokyo 100-8280 (JP); YORISHIGE, Tsuyoshi, Tokyo 100-8280 (JP)
(74) Representative: MERH-IP Matias Erny Reichl Hoffmann Patentanwälte PartG mbB
(86) International application number: PCT/JP2019/022653
(87) International publication number: WO 2019/240017

(57) **Abstract**

This train control device is provided with a leading carriage position measuring means for measuring the position of a leading carriage during travel, a final carriage position measuring means for measuring the position of a final carriage during travel, a train length calculating means for calculating a train length from measurement results obtained by the leading carriage position measuring means and the final carriage position measuring means, a leading carriage passing time measuring means for measuring the time at which the leading carriage passed a specific location, a final carriage passing time measuring means for measuring the time at which the final carriage passed the specific location, a speed measuring means for measuring the speed of the train, a traveled distance calculating means for calculating a traveled distance through which the train traveled from the leading carriage passing time until the final carriage passing time, on the basis of the measurement results obtained by the speed measuring means, the leading carriage passing time measuring means, and the final carriage passing time measuring means, a train completeness determining means for determining whether a difference between the train length and the traveled distance is equal to or less than a prescribed difference value, and a taillight means for indicating the final carriage, wherein the taillight means is a portable train taillight, and the final carriage position measuring means and the final carriage passing time measuring means are arranged integrally.

## Description

### Technical Field

The present invention relates to a train control device configured to monitor completeness of a train on board.

### Background Art

Operations for measuring a length of a train, positioning the train, and monitoring train completeness have been carried out for the purpose of assuring safety of train operations. The train completeness refers to the state in which all carriages composing the train are appropriately coupled, and no unintended separation from the train occurs while the train is stopped or traveling.

Japanese Unexamined Patent Publication No. 2016-186444 (Patent Literature 1) discloses measurement of the train length. The literature describes that "the train length measurement system calculates the train length based on the traveled distance of the train traveling from a time point t1 at which the leading carriage has passed over a prescribed feature point Q of the track R to a time point t2 at which the final carriage has passed over the feature point Q. The passage of the carriage over the feature point Q is determined based on a curvature P of the track part over which the carriage passes in reference to the yaw angular velocity ϕ detected by the on-board inertial sensor, and the traveling speed V of the train".

Japanese Unexamined Patent Application Publication No. Hei 09-295577 (Patent Literature 2) discloses positioning of the train and the train completeness. The literature describes that "provided are distance sensors mounted at least on the leading carriage and the final carriage of the train, respectively for detecting the traveled distance of the train, the position detectors for detecting current positions of the carriages, and a collator for collation between the current positions of the carriages. Those components are distributedly arranged. The collator obtains a train length value from the difference between the current positions of the carriages, which have been detected by the position detectors mounted at least on the leading carriage and the final carriage. The obtained train length value is compared and collated with a set value of train length. If those values coincide or substantially coincide with each other in an allowable range, the obtained train length value is detected as the true train length. If those values of the train length do not coincide with each other, or deviate from the allowable range, and furthermore, the obtained train length value exceeds a preset position recognition error range, the state is detected as separation from the train".

### Citation List

### Patent Literature

Patent Literature 1: Japanese Unexamined Patent Publication No. 2016-186444
Patent Literature 2: Japanese Unexamined Patent Application Publication No. Hei 09-295577

### Summary of Invention

### Technical Problem

In the generally employed art as described above, the final carriage is required to mount the device for calculating the train length. In consideration of change in the train set of a freight train or the like, every carriage expected to become the final carriage is required to mount the device for calculating the train length.

It is an object of the present invention to monitor the train completeness based on the function of positioning the final carriage and the time, which has been imparted to the portable taillight of train.

### Solution to Problem

In order to solve the above-described problem, the present invention provides a train control device which includes a leading carriage positioning unit for measuring a position of a leading carriage of a train including a plurality of carriages at least in traveling, a final carriage positioning unit for measuring a position of a final carriage of the train at least in traveling, a train length calculation unit for calculating a train length of the train at least in traveling using a measurement result of the leading carriage positioning unit and a measurement result of the final carriage positioning unit, a leading carriage passing time measuring unit for measuring a leading carriage passing time point at which the leading carriage has passed over a specific point, a final carriage passing time measuring unit for measuring a final carriage passing time point at which the final carriage has passed over the specific point, a speed measuring unit for measuring speed of the train, a traveled distance calculation unit for calculating a traveled distance of the train traveling from the leading carriage passing time point to the final carriage passing time point based on measurement results of the speed measuring unit, the leading carriage passing time measuring unit, and the final carriage passing time measuring unit, a train completeness determination unit for calculating a difference between the train length of the train, which has been calculated by the train length calculation unit, and the traveled distance calculated by the traveled distance calculation unit, and determining whether or not the calculated difference is within a range of a prescribed difference value, and a taillight unit for indicating the final carriage of the train. The taillight unit is a portable taillight of train, and provided with the final carriage positioning unit and the final carriage passing time measuring unit in an integral arrangement.

### Advantageous Effects of Invention

The present invention ensures monitoring of the train completeness based on the function of positioning the final carriage and the time, which has been imparted to the portable taillight of train. The problems, structures, and effects other than those described above will be clarified by explanations of the examples as described below.

### Brief Description of Drawings

Figure 1 illustrates a structure of a train completeness monitoring system according to a first example of the present invention.
Figure 2 illustrates a structure of a leading-carriage-side device according to the first example.
Figure 3 illustrates a structure of a final-carriage-side device according to the first example.
Figure 4 illustrates an example of information displayed on an information display terminal according to the first example.
Figure 5 is a flowchart representing a procedure executed by the train completeness monitoring system according to the first example.
Figure 6 is a flowchart representing a procedure for measurement of a length of the train, and approval of the train length by a train operator before starting train operations according to the second example.

### Description of Examples

Examples will be described with reference to the drawings.

### First Example

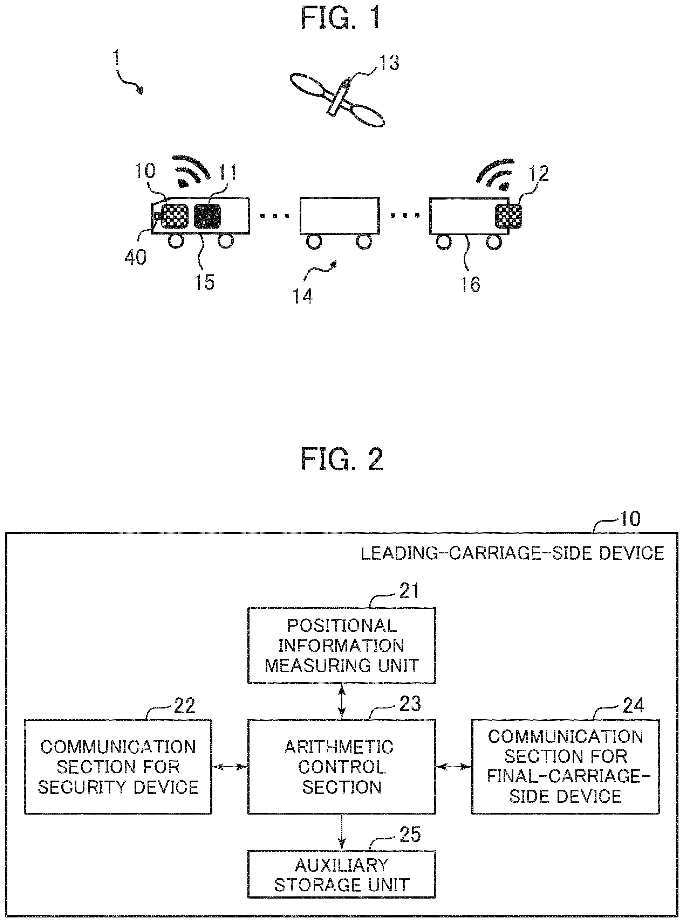

Figure 1 illustrates a structure of a train completeness monitoring system according to a first example of the present invention. Referring to Figure 1, a train completeness monitoring system 1 includes a leading-carriage-side device 10, an on-board security device 11, a final-carriage-side device 12, a satellite positioning system 13, and an information display terminal 40. The leading-carriage-side device 10, the on-board security device 11, and the information display terminal 40 are mounted on a leading carriage 15 of a train (for example, freight train) 14 including a plurality of carriages. The final-carriage-side device 12 is mounted on a final carriage (rearmost carriage) 16 of the train 14. The leading-carriage-side device 10, the on-board security device 11, the final-carriage-side device 12, and the information display terminal 40 compose the train control device.

The satellite positioning system 13 includes a plurality of communication satellites orbiting the earth, and performs communication with a communication target such as the leading-carriage-side device 10 and the final-carriage-side device 12 through transmission of time information containing transmission time.

The on-board security device 11 configured to manage security of the train 14 transmits and receives information to and from a central control device (not shown) for controlling operations of the train 14, and controls operations for driving a brake unit (not shown) based on the speed of the train 14. The on-board security device 11 includes a speed generator (speed sensor) as a speed measurement unit for measuring the speed of the train 14 so that the speed of the train 14 is measured (detected) based on the wheel rotation speed, for example. The on-board security device 11 compares the speed measured by the speed generator with a set speed, and controls operations for driving the brake unit based on the comparison result. The on-board security device 11 serves as a traveled distance calculation unit, which transmits and receives information to and from the leading-carriage-side device 10, calculates the traveled distance of the train 14 traveling from a time point at which the leading carriage 15 has passed over a specific point (measurement point) to a time point at which the final carriage 16 passes over the specific point based on the information from the leading-carriage-side device 10 and the measured speed, and transmits the distance information indicating the calculated result to the leading-carriage-side device 10.

Figure 2 illustrates a structure of the leading-carriage-side device according to the first example. Referring to Figure 2, the leading-carriage-side device 10 includes a positional information measuring unit 21, a communication section 22 for security device, an arithmetic control section 23, a communication section 24 for final-carriage-side device, and an auxiliary storage unit 25. The positional information measuring unit 21 serves as a leading carriage positioning unit which communicates with the satellite positioning system 13 during traveling of the train 14 to position (measure a position P_{fro} of) the leading carriage 15 in traveling, and outputs the positioning (measurement) result to the arithmetic control section 23. The communication section 24 for final-carriage-side device receives information of a position Pᵣₑₐ of the final carriage 16, and the information relating to a time point T_{A2} at which the final carriage 16 has passed over a predetermined point (measurement point) A so that the received information is outputted to the arithmetic control section 23.

The arithmetic control section 23 including a CPU (Central Processing Unit) with clock function, for example, serves as a leading carriage passing time measuring unit which manages the positioning result (position of the leading carriage 15) from the positional information measuring unit 21, and the time at which the leading carriage 15 has been positioned in association with each other, and measures a time point T_{A1} as the leading carriage passing time, at which the leading carriage 15 has passed over a specific point, for example, point A among those positioned by the positional information measuring unit 21. The arithmetic control section 23 stores the measurement information in the auxiliary storage unit 25, and transmits such information to the on-board security device 11 via the communication section 22 for security device. Upon reception of the information of the position Pᵣₑₐ of the final carriage 16, and the information relating to the time T_{A2} at which the final carriage 16 has passed over the specific point A from the communication section 24 for final-carriage-side device, the arithmetic control section 23 stores the received information in the auxiliary storage unit 25, and transmits the information relating to the time point T_{A2} at which the final carriage 16 has passed over the specific point A to the on-board security device 11 via the communication section 22 for security device.

The arithmetic control section 23 serves as a train length calculation unit which calculates a value of train length Lₚₒₛ of the train 14 based on the information of the position P_{fro} of the leading carriage 15, and the position Pᵣₑₐ of the final carriage 16, stores the calculation result in the auxiliary storage unit 25, and transmits the calculation result to the information display terminal 40 via the communication section 22 for security device. Upon reception of distance information representing a traveled distance D_{A1}-_{A2} of the train 14 traveling from the time at which the leading carriage 15 has passed over the specific point A to the time at which the final carriage 16 has passed over the specific point A from the on-board security device 11 via the communication section 22 for security device, the arithmetic control section 23 serving as a train completeness determination unit stores the received information in the auxiliary storage unit 25, and determines adequacy of the monitored train completeness of the train 14 based on the received information. For example, the arithmetic control section 23 calculates a difference (difference value) between the train length and the traveled distance of the train 14, and determines whether or not the calculated difference is within a range of a prescribed difference value. The determination result is then transmitted to the on-board security device 11 via the communication section 22 for security device.

Upon calculation of the difference (difference value) between the train length and the traveled distance of the train 14, the arithmetic control section 23 is capable of transmitting the calculation result to the information display terminal 40 via the communication section 22 for security device. The arithmetic control section 23 updates the positioning result of the positional information measuring unit 21 in accordance with movement of the train 14, and further updates the specific point from A to B, C, D, or the like, for example. In association with updating of the specific point, the information relating to the time at which the leading carriage 15 has passed over the specific point is updated.

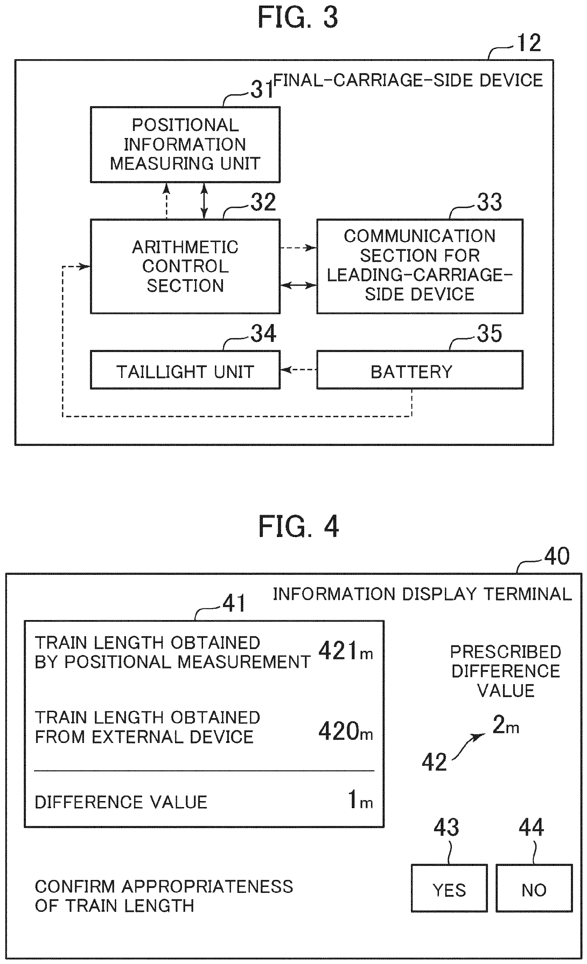

Figure 3 illustrates a structure of the final-carriage-side device according to the first example. Referring to Figure 3, the final-carriage-side device 12 includes a positional information measuring unit 31, an arithmetic control section 32, a communication section 33 for leading-carriage-side device, a taillight unit 34, and a battery 35. The final-carriage side device 12 is a main body (case) of a portable taillight unit, and mounted on the final carriage 16 by a worker upon setting of the train 14. Specifically, the final-carriage-side device 12 is configured by incorporating the positional information measuring unit 31, the arithmetic control section 32, the communication section 33 for leading-carriage-side device, and the battery 35 into the taillight unit (taillight of the train) 34 as the portable taillight unit in an integral manner.

The positional information measuring unit 31 serves as a final carriage positioning unit for communicating with the satellite positioning system 13 when the train 14 is traveling, positioning (measuring the position Pᵣₑₐ of) the final carriage 16 in traveling, and outputting the positioning (measurement) result to the arithmetic control section 32. The arithmetic control section 32 including a CPU with clock function serves as a final carriage passing time measuring unit for managing the positioning result (position of the final carriage 16) from the positional information measuring unit 31 and the time at which the final carriage 16 has been positioned (position has been measured) in association with each other, and measuring a time point T_{A2} as a final carriage passing time, at which the final carriage 16 has passed over a specific point, for example, point A among those positioned by the positional information measuring unit 31. The arithmetic control section 32 then outputs the information relating to the measured time T_{A2}, and the position Pᵣₑₐ of the final carriage 16 to the communication section 33 for leading-carriage-side device. The communication section 33 for leading-carriage-side device transmits the information relating to the time T_{A2} at which the final carriage 16 has passed over the specific point A, and the position Pᵣₑₐ of the final carriage 16 to the leading-carriage-side device 10.

The taillight unit 34 is provided with a red lamp for indicating the rearmost part of the train from the aspect of safety. The battery 35 supplies power to the taillight unit 34 and the arithmetic control section 32, and further to the positional information measuring unit 31 and the communication section 33 for leading-carriage-side device via the arithmetic control section 32. If the train completeness is not monitored for suppressing consumption of the battery 35, in other words, except the timing for positioning performed by the positional information measuring unit 31, the arithmetic control section 32 executes the control for stopping power supply to the positional information measuring unit 31 and the communication section 33 for leading-carriage-side device. The arithmetic control section 32 updates the measurement result of the positional information measuring unit 31, and further the specific point from A to B, C, D, or the like, for example, in association with movement of the train 14. The information relating to the time at which the final carriage 16 has passed over the specific point is updated in association with updating of the specific point.

Figure 4 illustrates an example of information displayed on an information display terminal according to the first example. Referring to Figure 4, the information display terminal 40 configured as a display unit, for example, a liquid crystal display device for displaying information from the leading-carriage-side device 10. A window 41 on the display screen of the information display terminal 40 displays "421 m" as the "train length obtained by positioning", "420 m" as the "train length obtained from the external device", and "1 m" as the "difference value". A display region adjacent to the window 41 displays a "prescribed difference value", that is, a threshold value of "2 m". In the region below the window 41, an operation button 43 to be operated for selecting "YES", and an operation button 44 to be operated for selecting "NO" are displayed for confirmation by the operator on appropriateness of the train length. The "prescribed difference value" is set to the value equal to or shorter than the length equivalent to that of the shortest carriage (freight vehicle) among those composing the train 14. If the difference (difference value) is larger than the prescribed difference value, it can be confirmed that the number of carriages composing the train 14 is smaller at least by one carriage. If the difference (difference value) is larger than the prescribed difference value, it can be confirmed that the train completeness is inadequate, indicating that the final carriage 16 has been separated from the train 14.

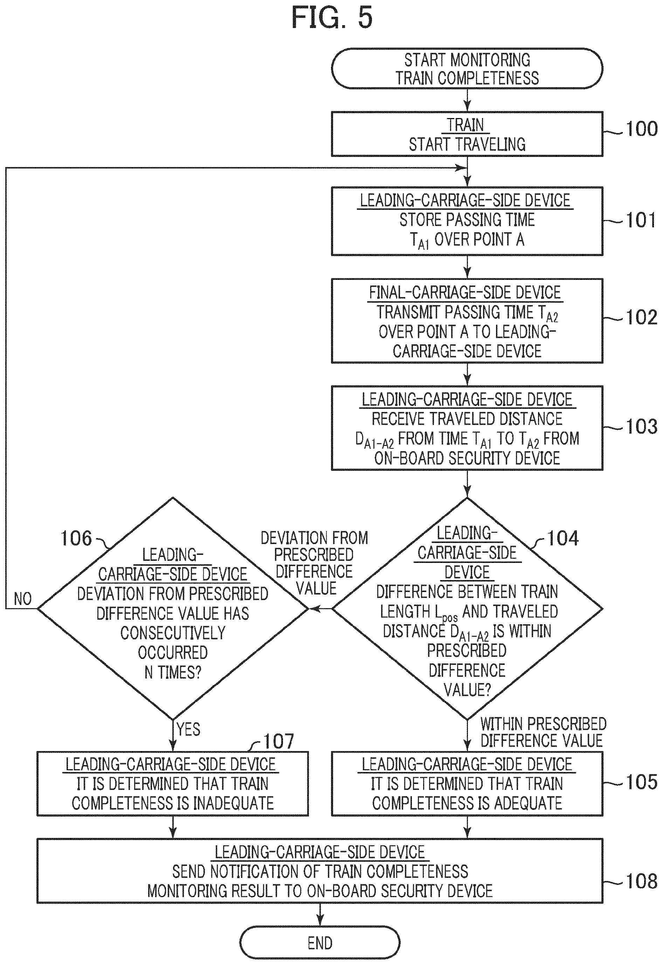

Figure 5 is a flowchart representing a procedure executed by the train completeness monitoring system according to the first example. Operations to be executed based on the flowchart shown in Figure 5 will be described.

Step 100: The train 14 as a target to be monitored by the train completeness monitoring system 1 starts traveling.

Step 101: The leading-carriage-side device 10 communicates with the satellite positioning system 13, positions (measures the position of) the leading carriage 15 in traveling, measures the passing time T_{A1} at which the leading carriage 15 has passed over the specific point A among those positioned, and stores the information relating to the measured passing time T_{A1}, and the information relating to the position of the leading carriage 15 in association with each other in the auxiliary storage unit 25.

Step 102: The final-carriage-side device 12 communicates with the satellite positioning system 13, positions (measures the position of) the final carriage 16 in traveling, measures the passing time T_{A2} at which the final carriage 16 has passed over the specific point A among those positioned, and transmits the information relating to the measured passing time T_{A2} and the positional information relating to the position of the final carriage 16 to the leading-carriage-side device 10. The leading-carriage-side device 10 then transmits the information of the passing time T_{A1} at which the leading carriage 15 has passed over the specific point A, and the information of the passing time T_{A2} at which the final carriage 16 has passed over the specific point A to the on-board security device 11.

Step 103: The on-board security device 11 measures the speed of the train 14. Upon reception of the information of the passing time T_{A1} and T_{A2} from the leading-carriage-side device 10, the on-board security device 11 calculates the traveled distance D_{A1-A2} of the train 14 traveling from the time T_{A1} to T_{A2} based on the measured speed, and the information of the passing time T_{A1} and T_{A2}. The information relating to the calculated traveled distance D_{A1-A2} is transmitted to the leading-carriage-side device 10. The communication section 22 for security device, which is installed in the leading-carriage-side device 10 receives the information of the traveled distance D_{A1}-_{A2} of the train 14 traveling from the time T_{A1} to T_{A2} from the on-board security device 11.

Step 104: The arithmetic control section 23 of the leading-carriage-side device 10 calculates the train length Lₚₒₛ of the train 14 based on the information of the position P_{fro} of the leading carriage 15, and the position Pᵣₑₐ of the final carriage 16. It is then determined whether or not the difference (difference value) between the calculated train length Lₚₒₛ and the traveled distance D_{A1}-_{A2} is within a range of the prescribed value, that is, the prescribed difference value. If the difference is within the range of the prescribed difference value (inclusive of the prescribed difference value), the arithmetic control section 23 of the leading-carriage-side device 10 allows the process to proceed to step 105. If the difference deviates from the prescribed difference value (exclusive of the prescribed difference value), the process proceeds to step 106.

Step 105: The arithmetic control section 23 of the leading-carriage-side device 10 determines that the train completeness is adequate because of the difference within the range of the prescribed difference value. The process then proceeds to step 108.

Step 106: If the difference deviates from the prescribed difference value, the arithmetic control section 23 of the leading-carriage-side device 10 determines whether or not the "deviation from the prescribed difference value" has consecutively occurred N times. If it is determined that the "deviation from the prescribed difference value" has consecutively occurred N times, for example, three times, the process proceeds to step 107. Meanwhile, if it is determined that the "deviation from the prescribed difference value" has not consecutively occurred N times, for example, three times, the arithmetic control section 23 of the leading-carriage-side device 10 returns to step 101, and executes the process steps from 101 to 106 repeatedly. In other words, even if it is determined that the deviation of the difference from the prescribed difference value has occurred once, or twice consecutively, such error is regarded as being allowable. The above-described determination is made on the assumption that the leading-carriage-side device 10 and the final-carriage-side device 12 of the train 14 traveling in the tunnel cannot communicate with the satellite positioning system 13.

Step 107: If it is determined that the "deviation from the prescribed difference value" has consecutively occurred N times, the arithmetic control section 23 of the leading-carriage-side device 10 determines that the train completeness is inadequate (that is, separation of the carriage from the train 14 has occurred), and the process proceeds to step 108.

Step 108: The arithmetic control section 23 of the leading-carriage-side device 10 sends (transmits) a notification of determination results obtained in step 105, or step 107 to the on-board security device 11 and the information display terminal 40, or the central control device as the train completeness monitoring result. Then the processing of the routine ends. If the train completeness is inadequate, the on-board security device 11 outputs a command to apply emergency braking, or sends the notification of the inadequacy to the central control device, for example. As the information display terminal 40 displays the information of the received train completeness monitoring result, the train operator may be notified of the train completeness monitoring result via the information display terminal 40.

The example allows monitoring of the train completeness based on the function imparted to the portable train taillight for measuring the position of the final carriage and the time. In other words, in response to change in the train set, the final-carriage-side device 12 provided with the taillight unit 34 may be simply moved to the final carriage 16 to allow continuous monitoring of the train completeness without providing an additional device. The device for calculating the train length does not have to be added to every carriage expected to become the final carriage for the change in the train set. This makes it possible to contribute to cost reduction of the train completeness monitoring system 1. The employment of the train completeness monitoring system 1 according to the example does not require modification of the method of operation using the train taillight on the rearmost end of the train.

### Second Example

This example is configured by applying the train length measuring function using the leading-carriage-side device 10, the on-board security device 11, the final-carriage-side device 12, and the satellite positioning system 13 according to the first example to the procedure for measurement of the train length, and approval of the train length made by the train operator before starting train operations. The hardware of the train completeness monitoring system 1 of this example has the same structure as that of the hardware according to the first example.

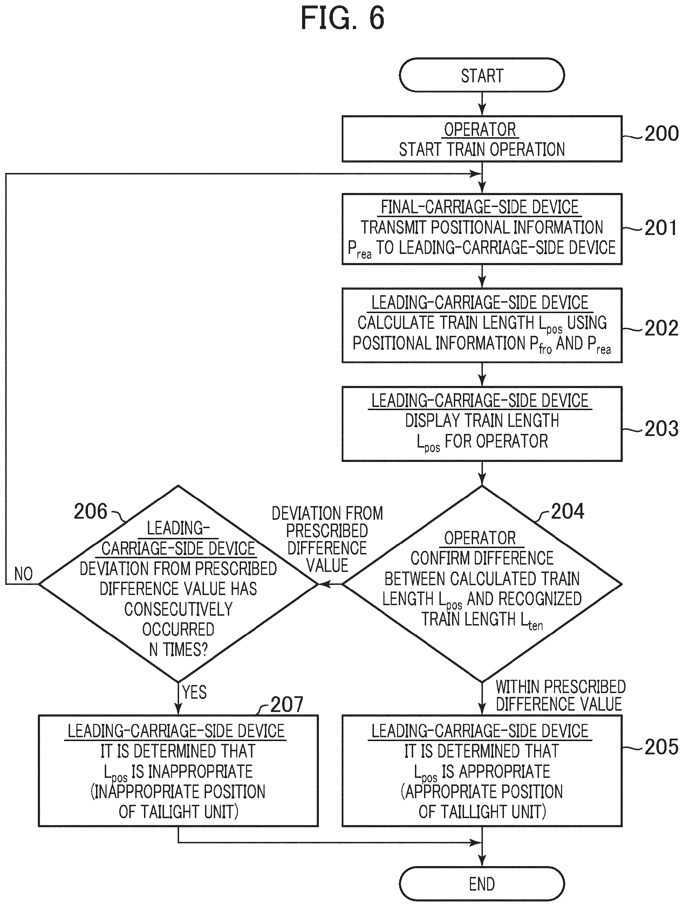

Figure 6 is a flowchart representing a procedure for measurement of the train length, and approval of the train length made by the train operator before starting train operations. Operations to be executed based on the flowchart shown in Figure 6 will be described.

Step 200: The operator (train operator) activates the train 14 before starting train operations (activates various devices mounted on the train 14).

Step 201: When the train 14 is stopped, the final-carriage-side device 12 communicates with the satellite positioning system 13, positions (measure the position of) the final carriage 16 in the stopped state, and transmits the positional information Pᵣₑₐ relating to the position of the final carriage 16 to the leading-carriage-side device 10.

Step 202: When the train 14 is stopped, the leading-carriage-side device 10 communicates with the satellite positioning system 13, positions (measure the position of) the leading carriage 15 in the stopped state, and generates positional information P_{fro} relating to the position of the leading carriage 15. The train length Lₚₒₛ is then calculated using the generated positional information P_{fro} and the received positional information Pᵣₑₐ.

Step 203: The leading-carriage-side device 10 transmits the information relating to the calculated train length Lₚₒₛ to the information display terminal 40. The information display terminal 40 displays the information relating to the train length Lₚₒₛ to notify the operator of the information relating to the train length Lₚₒₛ.

Step 204: Referring to the information displayed on the information display terminal 40, the operator confirms whether or not the difference (difference value) between the "train length obtained by positioning" as the train length Lₚₒₛ calculated by the leading-carriage-side device 10, and the "train length obtained from the external device" as the recognized train length (actual train length) Lₜₑₙ which has been recognized by the other device or the operator is within a range of the prescribed value or the prescribed difference value (inclusive of the prescribed difference value). If the operator determines that the difference is within the range of the prescribed difference value, and operates the operation button 43, the process proceeds to step 205. If the operator determines that the difference deviates from the prescribed difference value, and operates the operation button 44, the process proceeds to step 206.

Step 205: When the leading-carriage-side device 10 determines that the calculated train length Lₚₒₛ is appropriate, that is, the position of the taillight unit 34 is appropriate, the processing of this routine ends. At the above-described timing, from the aspect of safety, the arithmetic control section 23 determines that the position of the taillight unit 34 that should be disposed at the rearmost end of the train is appropriate.

Step 206: If the difference deviates from the prescribed difference value, the leading-carriage-side device 10 determines whether or not the "deviation from the prescribed difference value" has consecutively occurred N times. If it is determined that the "deviation from the prescribed difference value" has consecutively occurred N times, for example, three times, the process proceeds to step 207. If it is determined that the "deviation from the prescribed difference value" has not consecutively occurred N times, for example, three times, the process returns to step 201, and executes the process steps from 201 to 206 repeatedly.

Step 207: If the "deviation from the prescribed difference value" has consecutively occurred N times, the arithmetic control section 23 of the leading-carriage-side device 10 determines that the calculated train length Lₚₒₛ is inappropriate, that is, the position of the taillight unit 34 is inappropriate. Then the processing in this routine ends. At the above-described timing, from the aspect of safety, the arithmetic control section 23 determines that the position of the taillight unit 34 that should be disposed at the rearmost end of the train is inappropriate. Based on the operation of the train operator who has confirmed that the train completeness is inadequate, it is possible to execute the process so that the on-board security device 11 does not permit traveling of the train 14.

The arithmetic control section 23 of the leading-carriage-side device 10 sends (transmits) a notification of determination results obtained in step 205, or step 207 to the on-board security device 11 and the information display terminal 40, or the central control device as the train completeness monitoring result.

The example allows determination to be made whether or not the difference (difference value) between the train length Lₚₒₛ and the actual train length Lₜₑₙ is within the range of the prescribed difference value before starting operations of the train 14. The example further allows the information display terminal 40 to display the information of the difference (difference value) and the prescribed difference value so that the operator confirms whether or not the difference (difference value) is within the range of the prescribed difference value. The determination may be made whether or not the difference (difference value) between the train length Lₚₒₛ and the actual train length Lₜₑₙ is within the range of the prescribed difference value under the condition that the operator makes the confirmation. If it is determined that the difference (difference value) between the train length Lₚₒₛ and the actual train length Lₜₑₙ deviates from the prescribed difference value, it can be detected that the final-carriage-side device 12 is not mounted appropriately on the rear end 16 of the train.

The present invention is not limited to the embodiments as described above, but includes various modifications. For example, the examples are described in detail for readily understanding of the present invention which is not necessarily limited to the one equipped with all structures as described above. It is possible to replace a part of the structure of one example with the structure of another example. The one example may be provided with an additional structure of another example. It is further possible to add, remove, and replace the other structure to, from and with a part of the structure of the respective examples.

The respective structures, functions, processing sections, processing unit and the like may be realized through hardware by designing those elements partially or entirely using the integrated circuit. The respective structures, functions, and the information such as the program for the processer to implement the respective functions, the table, and the file may be stored in a storage unit such as the memory, hard disk, SSD (Solid State Drive), or a recording medium such as the IC card, SD card, and DVD.

### Reference Signs List

- 10: leading-carriage-side device,
- 11: on-board security device,
- 12: final-carriage-side device,
- 13: satellite positioning system,
- 14: train,
- 15: leading carriage,
- 16: final carriage,
- 21: positional information measuring unit,
- 22: communication section for security device,
- 23: arithmetic control section,
- 24: communication section for final-carriage-side device,
- 25: auxiliary storage unit,
- 31: positional information measuring unit,
- 32: arithmetic control section,
- 33: communication section for leading-carriage-side device,
- 34: taillight unit,
- 35: battery,
- 40: information display terminal

## Claims

1. A train control device, comprising:
a leading carriage positioning unit for measuring a position of a leading carriage of a train including a plurality of carriages at least in traveling;
a final carriage positioning unit for measuring a position of a final carriage of the train at least in traveling;
a train length calculation unit for calculating a train length of the train at least in traveling using a measurement result of the leading carriage positioning unit and a measurement result of the final carriage positioning unit;
a leading carriage passing time measuring unit for measuring a leading carriage passing time point at which the leading carriage has passed over a specific point;
a final carriage passing time measuring unit for measuring a final carriage passing time point at which the final carriage has passed over the specific point;
a speed measuring unit for measuring speed of the train;
a traveled distance calculation unit for calculating a traveled distance of the train traveling from the leading carriage passing time point to the final carriage passing time point based on measurement results of the speed measuring unit, the leading carriage passing time measuring unit, and the final carriage passing time measuring unit;
a train completeness determination unit for calculating a difference between the train length of the train, which has been calculated by the train length calculation unit, and the traveled distance calculated by the traveled distance calculation unit, and determining whether or not the calculated difference is within a range of a prescribed difference value; and
a taillight unit for indicating the final carriage of the train, wherein the taillight unit is a portable taillight of train, and provided with the final carriage positioning unit and the final carriage passing time measuring unit in an integral arrangement.

2. The train control device according to claim 1, wherein the train completeness determination unit transmits information representing a determination result indicating whether or not the difference is within the range of the prescribed difference value to at least one of a central control device for controlling operations of the train, and an on-board security device for managing security of the train.

3. The train control device according to claim 1, further comprising a display unit for displaying information at least from the train completeness determination unit, wherein the display unit displays information relating to a value of the difference calculated by the train completeness determination unit, and the prescribed difference value.

4. The train control device according to claim 1, wherein:
if the leading carriage positioning unit measures a position of the leading carriage in a stopped state, and the final carriage positioning unit measures a position of the final carriage in the stopped state when the train is stopped, the train length calculation unit calculates the train length when the train is stopped using measurement results of the leading carriage positioning unit, and the final carriage positioning unit; and
the train completeness determination unit calculates a difference between the train length calculated by the train length calculation unit when the train is stopped, and a set recognized train length, and determines whether or not the calculated difference is within the range of the prescribed difference value.

5. The train control device according to claim 4, further comprising a display unit for displaying information at least from the train completeness determination unit, wherein the display unit displays information relating to the value of the difference calculated by the train completeness determination unit, and the prescribed difference value, and a plurality of operation buttons for confirmation whether or not the difference calculated by the train completeness determination unit is within the range of the prescribed difference value.

6. The train control device according to claim 5, wherein under a condition that one of the operation buttons displayed on the display unit is operated, the train completeness determination unit determines whether or not train completeness is adequate in accordance with the operated operation button, and transmits information of a result of the determination to at least one of a central control device for controlling operations of the train, and an on-board security device for managing security of the train.

7. The train control device according to any one of claims 3 to 6, wherein the prescribed difference value is set to a value equal to or smaller than a value equivalent to a length of one carriage composing the train.

8. The train control device according to claim 1, further comprising an electrical storage device for supplying power to the taillight unit and the final carriage passing time measuring unit, wherein the final carriage passing time measuring unit supplies power from the electrical storage device to the final carriage positioning unit for positioning, and otherwise stops power supply to the final carriage positioning unit.
